# EUROPÄISCHE PATENTANMELDUNG

(11) **EP 1 108 867 A2**
(43) Veröffentlichungstag der Anmeldung: **20.06.2001**
(21) Anmeldenummer: 00126745.9
(22) Anmeldetag: 06.12.2000
(51) Int. Cl.: F01P 7/16

(54) **Dreiwegeventil**

(30) Priorität: 17.12.1999 DE 19960931
(71) Anmelder: ROBERT BOSCH GMBH, 70442 Stuttgart (DE)
(72) Erfinder: Hartmann, Thomas, 76571 Gaggenau (DE); Damson, Daniel, 71254 Ditzingen (DE); Hohl, Reiner, 70197 Stuttgart (DE); Schmitt, Manfred, 64646 Heppenheim (DE); Kappenstein, Ulrich, 75438 Knittlingen (DE); Mann, Karsten, 70469 Stuttgart (DE)

(57) **Zusammenfassung**

Die Erfindung geht aus von einem Dreiwegeventil (10) für einen Kühl-/Heizkreislauf (48) einer Brennkraftmaschine (50), dessen Drosselkörper (12) elektrisch in Abhängigkeit von Betriebsparametern und Umgebungsparametern durch eine Steuereinheit (52) ansteuerbar ist.

Es wird vorgeschlagen, daß der Drosselkörper (12) als Ventilküken ausgebildet ist, mindestens einen ihn durchdringenden Verteilerkanal (30) aufweist und durch einen Elektromotor (54) um eine Drehachse (20) entsprechend einem der Steuereinheit (52) zugeordneten Kennfeld verstellbar ist.

## Beschreibung

### Stand der Technik

Die Erfindung geht von einem Dreiwegeventil nach dem Oberbegriff des Anspruchs 1 aus.

Aus der DE 41 09 498 A1 ist eine Vorrichtung und ein Verfahren zu einer sehr feinfühligen Regelung der Temperatur einer Brennkraftmaschine bekannt. Hierzu werden einer Steuereinrichtung mehrere Eingangssignale, wie z.B. die Temperatur der Brennkraftmaschine, die Drehzahl und Last der Brennkraftmaschine, die Fahrzeuggeschwindigkeit, der Betriebszustand einer Klimaanlage bzw. der Heizung des Fahrzeugs und die Temperatur des Kühlwassers, zugeleitet. Ein Sollwertgeber der Steuereinrichtung ermittelt unter Berücksichtigung der Eingangssignale einen Temperatursollwert für die Brennkraftmaschine. Entsprechend einem Vergleich der Istwerte mit den Sollwerten wirkt die Steuereinrichtung auf ein Dreiwegeventil, das im Mündungsbereich einer Bypassleitung in einer Rohrleitung zwischen der Brennkraftmaschine und einem Kühler angeordnet ist. Je nach Stellung des Dreiwegeventils wird der Zulaufstrom auf den Kühlzweig und auf den Bypass aufgeteilt. Damit wird eine Kühlung der Brennkraftmaschine nicht nur in Abhängigkeit von unmittelbar für die Temperaturentwicklung wichtigen Betriebsparametern erfaßt, sondern auch in Abhängigkeit von Parametern von Zusatzaggregaten, die die Temperatur nur mittelbar beeinflussen. Weiterhin werden die Möglichkeiten der Einstellung der optimalen Temperatur wesentlich erweitert, weil auch Störungen erfaßt und berücksichtigt werden können. Durch die Zuordnung verschiedener Einsatzbedingungen zu unterschiedlichen Bereichen von Temperatursollwerten ist eine schnelle Einstellung der gewünschten Temperatur möglich, was durch unterschiedliche Prioritäten der Einsatzbedingungen weiter verfeinert werden kann.

Es ist weiterhin bekannt, im Kühlkreislauf der Brennkraftmaschine die Kühlmitteltemperatur mit Hilfe eines Thermostatventils zu regeln. Dabei wird das Mischverhältnis zwischen einer Zulaufleitung zum Kühler und einer Bypassleitung durch ein dehnstoffgetriebenes Thermostatventil in Abhängigkeit der Kühlmitteltemperatur eingestellt. Nachteilig ist allerdings, daß die Regelung träge ist und nur über die Kühlmitteltemperatur und nicht extern bzw. von einer übergeordneten Steuereinheit erfolgt. Viele Einflußgrößen werden dadurch erst nach der Veränderung der Kühlmitteltemperatur und demzufolge mit Verzögerung wirksam.

Aus anderen Bereichen, wie beispielsweise der Chemie, der Papierherstellung oder der Mineralölförderung, sind Kükenventile in Form von Kugelventilen zur Einstellung eines bestimmten Mischverhältnisses bekannt. Sie werden in der Regel extern angetrieben. Ein Ventilküken, ein Drosselkörper, ist vorzugsweise mit einer kugelförmigen Oberfläche und mit mindestens einem Verteilerkanal versehen. Der Drosselkörper ist in einem geometrisch angeglichenen Lagerbett in einem Ventilkörper gelagert. Der kugelförmige Drosselkörper ist mit einer Antriebswelle verbunden, die aus dem Ventilkörper nach außen geführt ist und durch einen Antrieb verstellbar ist. Entsprechend der Stellung des Drosselkörpers werden die Wege zu den weiterführenden Leitungen freigegeben, gedrosselt bzw. versperrt. In der Regel werden die Kugelventile aus einzelnen Komponenten montiert, wobei die Körper aus diversen Edelstahllegierungen, Grauguß, Sphäroguß, Niroguß, Stahlguß, Aluminiumlegierungen, PVC, PP, PVDF, PTFE, Titan oder Messing bestehen können. An den Verbindungsstellen zu den Leitungen befinden sich Dichtungen aus Fluorkunststoff, Keramik, Nitrilkautschuk, Reinstelastikgraphit oder POM, die wiederum in Kombination mit verschiedenen Körperwerkstoffen ein hohes Reibmoment erzeugen, so daß hohe Stellkräfte erforderlich sind und die Einstellung verzögert wird.

### Vorteile der Erfindung

Nach der Erfindung ist der Drosselkörper des Dreiwegeventils als Ventilküken ausgebildet, weist mindestens einen ihn durchdringenden Verteilerkanal auf und ist durch einen Elektromotor um die Drehachse entsprechend einem der Steuereinheit zugeordneten Kennfeld verstellbar.

Im Gegensatz zu magnetisch betätigten Ventilen, arbeitet das erfindungsgemäße Dreiwegeventil geräuschlos. Ferner besitzt es über den Stellwinkel des Drosselkörpers eine nahezu lineare Kennlinie des Volumenstroms und des Mischungsverhältnisses, so daß über ein zugeordnetes Kennfeld die Position für einen optimalen Kühlmittelvolumenstrom und die Kühlmitteltemperatur angesteuert werden kann. Dadurch kann die Wärmeregelung, die häufig durch lange Todzeiten im allgemeinen träge ist, wesentlich beschleunigt werden.

Besonders eignet sich hierfür ein Dreiwegeventil, dessen Drosselkörper eine kugelförmige Oberfläche und einen inneren Verteilerkanal hat. Dieser verläuft quer zur Drehachse und ist an einer im wesentlichen zur Drehachse parallelen Mantelfläche offen, während die gegenüberliegende Mantelfläche geschlossen ist. Durch Drehen der Kugel wird entweder der Kreislauf über den Kühler oder der Kreislauf über die Bypassleitung mehr oder weniger freigegeben. Das so gebildete seitlich zur Drehachse angeströmte Kugelventil weist im Vergleich zu den von unten angeströmten Kugelventilen eine idealere Mischkennlinie auf. Dies kann auf günstige Umlenkeffekte durch die Schrägstellung der Prallfläche am Drosselkörper in den Bereichen zwischen 60° und 120° Kugeldrehung zurückgeführt werden. Durch die günstigen Kennlinien und Strömungsverhältnisse eignet sich das Dreiwegeventil für Kühlkreisläufe mit elektrisch betriebenen Pumpen. Diese können kleiner dimensioniert werden, so daß sich ihre Leistungsaufnahme verringert und sich der Gesamtwirkungsgrad verbessert.

Das Dreiwegeventil wird von einem Elektromotor über eine Antriebswelle betätigt. Diese ist drehfest mit dem Drosselkörper verbunden; zweckmäßigerweise ist sie unmittelbar am Drosselkörper angespritzt, während ihr freies Ende lösbar mit dem Elektromotor verbunden wird.

Vorteilhafterweise ist das Dreiwegeventil als Flanschventil ausgeführt und direkt an der Brennkraftmaschine montiert, z.B. am Zylinderkopf. Durch diese Anordnung entfallen Schlauchverbindungen und der Montageaufwand ist gering. Im Bereich der Anschlüsse weist der Ventilkörper zum Drosselkörper hin Dichtungen aus Kunststoff auf, die gleichzeitig zur Lagerung des Drosselkörpers dienen. Ein Federelement, in Form von Elastomerelement, Tellerfeder, Sternfeder oder Varianten davon, hält den Dichtverband unter einer definierten Vorspannung. Dadurch ist einerseits eine gute Abdichtung gewährleistet und andererseits können Toleranzen bzw. der Verschleiß ausgeglichen werden.

Das Dreiwegeventil wird vorzugsweise im Montagespritzgußverfahren hergestellt, und zwar wird der Drosselkörper mit der Antriebswelle in einem ersten Fertigungsschritt als Spritzgußteil aus thermoplastischem Kunststoff erzeugt. Das Teil verbleibt in der Spritzgußmaschine und wird mit einem Trennmittel besprüht, damit sich der in einem zweiten Spritzgießprozeß eingebrachte thermoplastische Kunststoff für den Ventilkörper nicht mit dem Drosselkörper verbindet und dieser im späteren Ventilkörper drehbar gelagert ist. Vorzugsweise werden für dieses Verfahren gleiche Kunststoffe für die Spritzgußteile verwendet, um eine sortenreine Wiederverwertung zu gewährleisten. Der Einsatz eines Zweikomponenten-Spritzgußverfahrens ist prinzipiell aber auch möglich. Dieses Verfahren wird angewendet, um durch unterschiedliche Materialeigenschaften der beiden Spritzgußteile z.B. eine bessere Reibpaarung oder ein kostengünstigeres Ventil zu erzielen. Ein metallischer Drosselkörper mit Antriebswelle oder ein Drosselkörper aus Kunststoff, welche mit einem geeigneten Kunststoff umspritzt werden, ist ebenfalls denkbar.

Wenn auf separate Dichtungen nicht verzichtet werden kann, können diese vor dem Spritzgießvorgang im Werkzeug positioniert und teilweise umspritzt werden. Durch das vorgeschlagene Verfahren entfallen Montagearbeiten und der Fertigungsaufwand der Bauteile reduziert sich wesentlich, zumal wenn der Ventilkörper und der Drosselkörper ohne spanende Fertigungsverfahren produziert werden. Das Fertigungsverfahren ist besonders für Ventilküken mit einer kugelförmigen Oberfläche vorteilhaft, die sonst nur aufwendig herzustellen sind.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

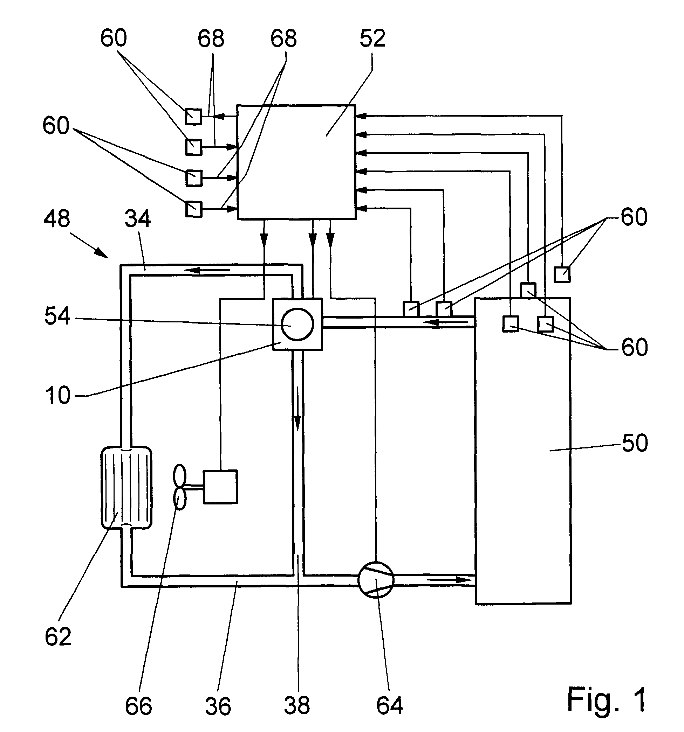

- Fig. 1: einen schematisch dargestellten Kühlkreislauf einer Brennkraftmaschine,
- Fig. 2: eine schematische Darstellung des Dreiwegeventils in der Mittelstellung,
- Fig. 3: eine schematische Darstellung des Dreiwegeventils in einer Endstellung und
- Fig. 4: eine perspektivische, teilweise geschnittene Darstellung eines erfindungsgemäßen Dreiwegeventils.

### Beschreibung des Ausführungsbeispiels

Von einer Brennkraftmaschine 50 führt eine Zulaufleitung 34 für Kühlmittel zu einem Kühler 62, der mit einem elektrisch angetriebenen Gebläse 66 zusammenarbeitet. Eine Rücklaufleitung 36 , in der eine elektrisch angetriebene Pumpe 64 angeordnet ist, verbindet den Kühler 62 mit der Brennkraftmaschine 50 und schließt so einen Kühlkreislauf 48. An dem Kühlkreislauf 48 kann ein nicht näher dargestellter Heizkreislauf einer Fahrzeugheizung oder Klimaanlage angeschlossen sein. Eine Bypassleitung 38 verbindet die Zulaufleitung 34 mit der Rücklaufleitung 36. Sie überbrückt den Kühler 62 und mündet stromaufwärts der Pumpe 64 in die Rücklaufleitung 36. Die Kühlmittelströmung ist durch Pfeile angedeutet.

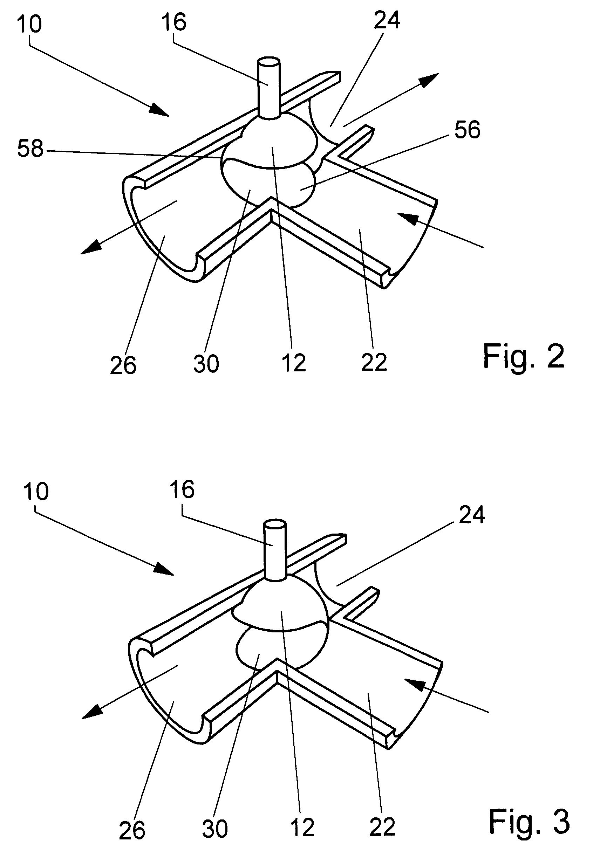

An der Abzweigung der Bypassleitung 38 von der Zulaufleitung 34 ist ein Dreiwegeventil 10 in Form eines Kükenventils vorgesehen, dessen Drosselkörper 12 (Fig. 2) durch einen Elektromotor 54 verstellbar ist. Dieser wird von einer Steuereinheit 52 angesteuert, die über Signalleitungen 68 mit zahlreichen, unterschiedlichen Sensoren 60 verbunden ist. Die Sensoren 60 erfassen Betriebsparameter und Umgebungsparameter der Brennkraftmaschine 50 und des Kühl-/Heizkreislaufs 48. Aus den Eingangsgrößen wird mit Hilfe mindestens eines zugeordneten Kennfeldes eine Stellgröße für den Elektromotor 54 erzeugt.

Das erfindungsgemäße Dreiwegeventil 10 besteht im wesentlichen aus einem Ventilkörper 14 und dem Drosselkörper 12 (Fig. 2). In der dargestellten Ausführung besitzt er eine kugelförmige Oberfläche. Es sind aber auch andere Oberflächenformen denkbar, wie beispielsweise zylindrische oder konische.

Der Drosselkörper 12 ist zweckmäßigerweise ein Spritzgußteil aus einem thermoplastischen Kunststoff. Vorzugsweise wird eine Antriebswelle 16 in einem Arbeitsgang angespritzt und ein innerer Verteilerkanal 30 sowie eine Bohrung 42 zur Aufnahme eines Temperatursensors 18 durch Einlegeteile ausgeformt, die vor dem Spritzguß in das Werkzeug eingelegt werden. Der Temperatursensor 18, der diametral zur Antriebswelle 16 angeordnet ist und in den Verteilerkanal 30 ragt, ist auf einfache Weise in das Dreiwegeventil 10 integriert und erfaßt die Kühlmitteltemperatur unmittelbar in diesem Bereich, d.h. in unmittelbarer Nähe der Brennkraftmaschine 50, wenn das Dreiwegeventil 10 mittels Schrauben, die durch Schraubenlöcher 70 im Ventilkörper 14 geführt sind, an einer Kühlmittelaustrittsöffnung an der Brennkraftmaschine 50 angeflanscht ist.

Der Verteilerkanal 30 verläuft quer zu einer Drehachse 20 des Drosselkörpers 12 und ist an einer im wesentlichen zur Drehachse 20 parallelen Mantelfläche 56 offen, während er an der gegenüberliegende Mantelfläche 58 geschlossen ist. Der Drosselkörper 12 kann aber auch einen Kern aus einem metallischen Werkstoff haben, der z.B. im Druckgußverfahren hergestellt ist und eine Kunststoffbeschichtung trägt.

Der Ventilkörper 14 bildet den äußeren Teil des Dreiwegeventils 10 und wird zweckmäßigerweise durch Montagespritzgießen aus thermoplastischem Kunststoff erzeugt. Hierzu wird die Oberfläche des Drosselkörpers 12 mit einer Trennschicht versehen, so daß sich der Werkstoff des Ventilkörpers 14 beim anschließenden Montagespritzgießen nicht mit dem Werkstoff des Drosselkörpers 12 verbindet. Es entstehen so enge Bewegungs- und Dichtspalte, so daß in der Regel auf separate Lager- und Dichtelemente verzichtet werden kann.

Der Ventilkörper 14 besitzt einen Anschluß 22 für den von der Brennkraftmaschine 50 kommenden Teil der Zulaufleitung 34, einen Anschluß 24 für den zum Kühler 62 führenden Teil der Zulaufleitung 34 und einen Anschluß 26 für die Bypassleitung 38. Die Anschlüsse 22, 24, 26 liegen in einer Ebene senkrecht zur Drehachse 20. Sie werden in einfacher Weise durch Einlegeteile im Spritzgußwerkzeug ausgeformt.

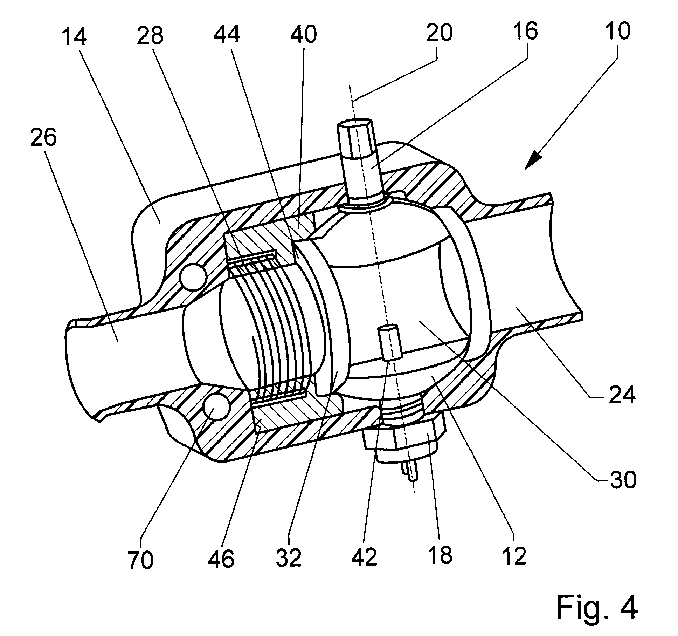

Im Bereich der Anschlüsse 24 und 26, die diametral zueinander liegen oder unter einem kleineren Winkel zueinander und zum Anschluß (22) angeordnet sein können, weist der Ventilkörper 14 in der Ausführung nach Fig. 4 zum Drosselkörper 12 hin separate Dichtringe 32 auf, die vorzugsweise aus Tetrafluoräthylen bestehen und gleichzeitig als Lagerung für den Drosselkörper 12 dienen. Der Dichtring 32 wird im Bereich des Anschlusses 26 durch eine Hülse 40 gehalten, die an einer Stirnfläche 44 am Dichtring 32 anliegt. Die Hülse 40 wird wiederum durch eine Schraubenfeder 28, die sich an einer Anlagefläche 46 am Ventilkörper 14 abstützt, an den Dichtring 32 gepreßt. Auf diese Art wird der Verschleiß an den Dichtringen 32 kompensiert und eine ausreichende Abdichtung über die gesamte Produktlebensdauer sichergestellt. Wird das Dreiwegeventil 10 im Montagespritzgußverfahren hergestellt, werden die Dichtringe 32, die Hülse 40 und die Schraubenfeder 28 vor dem Spritzgießen des Ventilkörpers 14 mit einer Trennschicht umgeben im Werkzeug positioniert und beim Spritzgußvorgang umspritzt.

Fig. 2 und Fig. 3 zeigen das Wirkprinzip eines seitlich angeströmten Dreiwegeventils 10. Bei der Stellung des Drosselkörpers 12 in Fig. 2 wird der maximale Durchfluß erreicht, indem der Anschluß 22, durch den das Kühlmittel zuströmt, sowohl mit dem Anschluß 24 zum Kühler 62 als auch mit dem Anschluß 26 zur Bypassleitung 38 verbunden ist. Bei der Stellung des Drosselkörpers 12 in Fig. 3 ist der Anschluß 24 zum Kühler 62 gesperrt und der gesamte Kühlmittelstrom wird über die Bypassleitung 38 geleitet. Zwischenstellungen sind auch möglich, so daß der Kühlmittelstrom beliebig auf einen Kreislaufzweig über den Kühler 62 und einen Kreislaufzweig über die Bypassleitung 38 entsprechend einem zugehörigen Kennfeld aufgeteilt werden kann.

### Bezugszeichen

- 10: Dreiwegeventil
- 12: Drosselkörper
- 14: Ventilkörper
- 16: Antriebswelle
- 18: Temperatursensor
- 20: Drehachse
- 22: Anschluß
- 24: Anschluß
- 26: Anschluß
- 28: Schraubenfeder
- 30: Verteilerkanal
- 32: Dichtring
- 34: Zulaufleitung
- 36: Rücklaufleitung
- 38: Bypassleitung
- 40: Hülse
- 42: Bohrung
- 44: Stirnfläche
- 46: Anlagefläche
- 48: Kühl-/Heizkreislauf
- 50: Brennkraftmaschine
- 52: Steuereinheit
- 54: Elektromotor
- 56: Mantelfläche
- 58: Mantelfläche
- 60: Sensor
- 62: Kühler
- 64: Pumpe
- 66: Gebläse
- 68: Signalleitung
- 70: Schraubenloch

## Patentansprüche

1. Dreiwegeventil (10) für einen Kühl-/Heizkreislauf (48) einer Brennkraftmaschine (50), dessen Drosselkörper (12) elektrisch in Abhängigkeit von Betriebsparametern und Umgebungsparametern durch eine Steuereinheit (52) ansteuerbar ist, dadurch gekennzeichnet, daß der Drosselkörper (12) als Ventilküken ausgebildet ist, mindestens einen ihn durchdringenden Verteilerkanal (30) aufweist und durch einen Elektromotor (54) um eine Drehachse (20) entsprechend einem der Steuereinheit (52) zugeordneten Kennfeld verstellbar ist.

2. Dreiwegeventil (10) nach Anspruch 1, dadurch gekennzeichnet, daß der Drosselkörper (12) eine kugelförmige Oberfläche und einen inneren Verteilerkanal (30) hat, der quer zu einer Drehachse (20) verläuft und an einer im wesentlichen zur Drehachse (20) parallelen Mantelfläche (56) offen ist, während die gegenüberliegende Mantelfläche (58) geschlossen ist.

3. Dreiwegeventil (10) nach einem der vorhergehenden Ansprüche, dadurch gekennzeichnet, daß am Drosselkörper (12) eine Antriebswelle (16) angespritzt ist.

4. Dreiwegeventil (10) nach einem der vorhergehenden Ansprüche, dadurch gekennzeichnet, daß der Ventilkörper (14) drei Anschlüsse (22, 24, 26) aufweist, die in einer Ebene liegen, wobei zwei Anschlüsse (24, 26) zueinander angeordnet sind und der dritte (22) im Winkel zu ihnen gelegen ist.

5. Dreiwegeventil (10) nach Anspruch 4, dadurch gekennzeichnet, daß der Ventilkörper (14) im Bereich der Anschlüsse (24, 26) zum Drosselkörper (12) Dichtringe (32) aufweist, die gleichzeitig zur Lagerung des Drosselkörpers (12) dienen.

6. Dreiwegeventil (10) nach Anspruch 5, dadurch gekennzeichnet, daß die Dichtringe (32) aus Kunststoff, vorzugsweise aus Tetrafluoräthylen bestehen.

7. Dreiwegeventil (10) nach Anspruch 6, dadurch gekennzeichnet, daß ein Federelement (28), in Form eines Elastomerelements, Tellerfeder, Sternfeder oder Varianten davon, die Dichtringe (32) an die Außenkontur des Drosselkörpers (12) anpreßt.

8. Dreiwegeventil (10) nach einem der vorhergehenden Ansprüche, dadurch gekennzeichnet, daß der Ventilkörper (14) einen Temperatursensor (18) aufweist, der in den Verteilerkanal (30) hineinragt.

9. Dreiwegeventil (10) nach einem der vorhergehenden Ansprüche, dadurch gekennzeichnet, daß der Ventilkörper (14) im Montagespritzgußverfahren hergestellt ist.

10. Dreiwegeventil (10) nach Anspruch 9, dadurch gekennzeichnet, daß der kugelförmige Drosselkörper (12) aus thermoplastischem Kunststoff besteht und im Spritzgußverfahren hergestellt ist.

11. Dreiwegeventil (10) nach einem der vorhergehenden Ansprüche, dadurch gekennzeichnet, daß der Ventilkörper (14) einen Flansch aufweist, mit dem er an einer Öffnung eines Kühlkanals der Brennkraftmaschine (50) angeflanscht ist.

12. Dreiwegeventil (10) nach einem der vorhergehenden Ansprüche, dadurch gekennzeichnet, daß es zusammen mit einer elektrisch angetriebenen, regelbaren Pumpe (64) in einem Kühlkreislauf einer Brennkraftmaschine (50) vorgesehen ist.
